# EUROPÄISCHE PATENTSCHRIFT

(11) **EP 1 188 865 B1**
(45) Veröffentlichungstag und Bekanntmachung des Hinweises auf die Patenterteilung: **01.02.2006**
(21) Anmeldenummer: 01120659.6
(22) Anmeldetag: 30.08.2001
(51) Int. Cl.: E02F 5/14, F16L 1/028

(54) **Verfahren und Vorrichtung zur Herstellung einer Rohrbettung**
Methode and device for creating a bedding for pipes
Procédé et appareil pour pour créer un support pour tuyaux

(30) Priorität: 19.09.2000 DE 10046299
(43) Veröffentlichungstag der Anmeldung: 20.03.2002
(73) Patentinhaber: Uhrig Strassen- und Tiefbau GmbH, 78187 Geisingen (DE)
(72) Erfinder: Uhrig, Thomas, Dipl.-Ing., 78187 Geisingen (DE)
(74) Vertreter: Müller-Boré & Partner Patentanwälte

(56) Entgegenhaltungen:
- WO-A-93/16911
- DE-C- 19 940 875
- FR-A- 2 682 408
- US-A- 3 727 332
- US-A- 4 741 646

## Beschreibung

Die Erfindung betrifft ein Verfahren und eine Vorrichtung zur Herstellung einer Rohrbettung.

Bekannte Verfahren zum Ausbilden einer Rohrbettung, insbesondere für Entwässerungskanäle und -leitungen, sind beispielsweise aus der DIN 4033 sowie aus der DIN EN 1610 bekannt. Bei den bekannten Verfahren wird zunächst ein Graben für das Rohr ausgehoben. Anschließend wird je nach Qualität des Bodens auf die Grabensohle zunächst eine erste Bettungsschicht aufgebracht, auf die das Rohr dann aufgelegt wird. Bei geeigneter Bodenqualität ist es auch möglich, das Rohr direkt auf die Grabensohle aufzulegen. In dieser Lage bildet sich jedoch im wesentlichen nur ein Linienkontakt zwischen dem Rohr und der Grabensohle aus, welcher zu hohen Spannungen führt. Aus diesen Gründen ist es erforderlich, daß der Freiraum bzw. Zwickel zwischen dem Rohr und der Grabensohle zuverlässig verfüllt und verdichtet wird. Dazu wird das Rohr von der Seite her unterstopft, was häufig durch Verfüllen mit Beton geschieht. Hierzu ist eine große Grabenbreite erforderlich, um die Zugänglichkeit, welche für ein derartiges Verfüllen erforderlich ist, zu gewährleisten. Die Verfahren sind sehr zeit- und damit kostenintensiv und erfordert zusätzliche Füllstoffe, wie Sand, Kies oder Beton. Ferner weisen diese Verfahren den Nachteil auf, daß von Hand auszuführende Arbeiten in dem Graben erforderlich sind. Dies erfordert einen Verbau des Grabens, um die notwendige Arbeitssicherheit für innerhalb des Grabens arbeitende Personen zu gewährleisten. Aus diesem Grund sind aufwendige Vorbereitungsmaßnahmen erforderlich, welche das Verlegen von Rohren aufwendig und teuer machen.

Die FR-A-268 2408 offenbart ein Verfahren zur Herstellung einer Rohrbettung, bei welchem nach dem Ausheben eines Grabens der Boden an der Grabensohle entsprechend der Außenkontur eines zur verlegenden Rohres u.a. auch mittels eines Profilierschildes, der eine Außenkontur aufweist, welche der Außenkontur des zu verlegenden Rohres entspricht, profiliert werden kann. Bei dem Verfahren kommt der Einsatz eines Laserstrahles zur Anwendung, welcher parallel zur Richtung des zu verlegenden Rohres ausgerichtet wird. Zur Ausübung des Verfahrens wird dabei eine Vorrichtung an dem freien Ende eines Baggerarmes angeordnet, die mit einem Endbereich nahe der Muffe eines bereits verlegten Rohrstückes aufgesetzt wird. Die Zieltafel für den Laserstrahl befindet sich dabei an der Vorrrichtung, nicht aber an dem u.a. einsetzbaren Profilierschild, welches zur Profilierung des Bodens an der Vorrichtung über einen Motor in Rohrachsenlängsrichtung bewegt wird. Der Baggerarm dient dazu, geringe Lagekorrekturen der Vorrichtung senkrecht bzw. quer zur Rohrachse auszuführen, um den Laserstrahl an der gewünschten Stelle der Zieltafel auftreffen zu lassen.

Es ist Aufgabe der Erfindung, ein Verfahren und eine Vorrichtung zur Herstellung einer Rohrbettung zu schaffen, welche ein einfacheres, schnelleres und kostengünstigeres Verlegen von Rohren ermöglichen, sowie eine größereArbeitssicherheit bieten.

Die Aufgabe wird durch ein Verfahren mit den im Anspruch 1 angegebenen Merkmalen sowie durch eine Vorrichtung mit den im Anspruch 11 angegebenen Merkmalen gelöst. Bevorzugte Ausführungsformen ergeben sich aus den jeweiligen Unteransprüchen.

Bei dem erfindungsgemäßen Verfahren wird zunächst in herkömmlicher Weise ein erforderlicher Graben ausgehoben. Dann wird an der Grabensohle entsprechend der Außenkontur eines zu verlegenden Rohres eine Rohrbettung mit einem Profilierschild ausgebildet. Der Profilierschild weist insbesondere an seiner Unterseite eine Außenkontur auf, welche der Außenkontur des Rohres zumindest in dem Bereich des Rohres entspricht, welcher auf die Rohrbettung aufgelegt wird. Das bedeutet, der Profilierschild weist an seiner Unterseite die gleiche Außenkontur wie die Unterseite des zu verlegenden Rohres auf. Ferner wird im Graben ein Laserstrahl parallel zur Richtung des zu verlegenden Rohres ausgerichtet. An dem Profilierschild ist ein Laserspiegel bzw. ein Schirm angebracht, auf den der Laserstrahl auftrifft. Der Profilierschild wird dann derart in Längsrichtung des zu verlegenden Rohres über bzw. durch den Boden der Grabensohle geführt, daß der Laserstrahl während der Bewegung des Profilierschildes immer in einem vorbestimmten Bereich auf dem Laserspiegel auftrifft. Der Laserstrahl gibt somit die Richtung der auszubildenden Rohrbettung vor und dient zur präzisen Führung des Profilierschildes, um eine Rohrbettung genau entlang der vorgegebenen Richtung auszubilden. An dem Laserspiegel bzw. dem Schirm kann ein Fadenkreuz oder eine ähnliche Markierung angebracht sein, um die Position des Laserstrahls genau erfassen zu können. Auf die so profilierte Rohrbettung wird das Rohr aufgelegt, so daß es im profilierten Bereich direkt am Erdreich anliegt, d.h. mit einem vorbestimmbaren Auflagewinkel auf dem ausprofilierten Rohrbett aufliegt, wodurch eine großflächige Kraftübertragung ermöglicht wird und Spannungen minimiert werden. Es wird eine Rohrbettung geschaffen, die im wesentlichen einer im unterirdischen Rohrvortrieb erzeugten Rohrbettung entspricht. Ein aufwendiges Unterstopfen und Ausfüllen eines Zwickels zwischen dem Rohr und der Grabensohle wie beim Verlegen des Rohres auf einer ebenen Grabensohle ist nicht mehr erforderlich. Aus diesem Grund kann der Graben schmaler ausgehoben werden, da keine Verdichtungsarbeiten seitlich des Rohres erforderlich sind. Ferner ist es nicht erforderlich, manuelle Arbeiten innerhalb des Grabens auszuführen. Das gesamte Verfahren kann von oben her ausgeführt werden, ohne daß sich Personen im Graben aufhalten müssen. Auf diese Weise kann die Arbeitssicherheit erhöht werden und zusätzlich kann auf einen Verbau des Grabens verzichtet werden.

Dabei ist der Profilierschild am Ausleger eines Baggers angebracht und wird von dem Bagger durch den Boden geführt. Der Bagger kann neben oder über dem Graben stehen und verfahren und dabei den an dem Ausleger angebrachten Profilierschild durch den Boden an der Grabensohle bewegen, wobei an der Grabensohle eine Rohrbettung entsprechend dem Profil bzw. der Außenkontur des Profilierschildes ausgebildet wird. Es sind somit keine aufwendigen Spezialmaschinen erforderlich, vielmehr können herkömmliche Bagger eingesetzt werden.

An dem Laserspiegel ist vorzugsweise eine Bildübertragungseinrichtung vorgesehen, welche das Bild des auftreffenden Laserstrahls an einen entfernten Ort, vorzugsweise in das Fahrerhaus des Baggers überträgt. Somit ist es nicht erforderlich, daß eine Person zur Überwachung der Position des Laserstrahls an dem Laserspiegel im Graben in der Nähe des Profilierschildes anwesend ist. Vielmehr kann das gesamte Verfahren von einem entfernten Ort vorzugsweise von dem Baggerfahrer gesteuert werden. Auf diese Weise kann die Arbeitssicherheit bei der Ausführung des Verfahrens erhöht werden, da auf eine Anwesenheit von Personen im Graben verzichtet werden kann. Zweckmäßigerweise ist die Bildübertragungseinrichtung eine an dem Laserspiegel vorgesehene Videokamera, welche das Bild des auftreffenden Laserstrahls aufnimmt und auf einen Monitor im Fahrerhaus des Baggers überträgt. Der Baggerfahrer kann den Bagger und den Profilierschild so steuern bzw. bewegen, daß der Laserstrahl konstant auf einen vorbestimmten Bereich des Laserspiegels auftrifft. Ein solcher Bereich kann beispielsweise durch ein Fadenkreuz markiert sein. Damit wird sichergestellt, daß beim Ausbilden der Rohrbettung der Profilierschild genau entlang des geradlinig verlaufenden Laserstrahls geführt wird, wodurch eine genau ausgerichtete Rohrbettung parallel zu dem Laserstrahl erzeugt wird.

Weiter bevorzugt ist an dem Laserspiegel zumindest ein Sensorelement zur Erfassung der Position des auftreffenden Laserstrahls vorgesehen. Bei dem Sensorelement kann es sich beispielsweise um Photodioden handeln. Auf diese Weise ist eine automatische Erfassung der Position des Laserstrahls möglich, welche genutzt werden kann, um Daten für eine automatische Steuerung des gesamten Verfahrens zu liefern. Beispielsweise kann dann auch der Vorschub des Profilierschildes entlang der Grabensohle automatisch in Reaktion auf die von dem Sensorelement erfaßten Daten erfolgen, so daß der Profilierschild automatisch entlang dem Laserstrahl geführt wird.

Gegebenenfalls wird nach dem Ausheben des Grabens zumindest ein Teil des ausgehobenen und/oder an der Grabensohle anstehenden Bodens aufbereitet, der aufbereitete Boden an der Grabensohle verdichtet und die Rohrbettung in dem aufbereiteten und verdichteten Boden ausgebildet. Dieser Verfahrensschritt ist erforderlich, wenn der an der Grabensohle anstehende Boden keine geeignete Qualität und Konsistenz aufweist, die es ermöglicht, ein Rohr ausreichend sicher zu tragen. Durch das Aufbereiten des anstehenden Bodens wird die Menge der erforderlichen Füll- bzw. Zusatzstoffe, wie Kies, Sand oder Beton minimiert, da hauptsächlich der anstehende Boden zum Ausbilden der Rohrbettung verwendet werden kann. Es kann der zunächst unbrauchbare Boden verwendet werden, so daß er nicht durch Ersatzstoffe ersetzt werden muß. Dadurch werden auch die Vorschriften des Kreislaufwirtschafts- und Abfallgesetzes erfüllt.

Vorzugsweise wird der Boden beim Aufbereiten homogenisiert. Auf diese Weise wird eine homogene, gleichmäßige Körnung des Bodens erreicht, so daß eine glatte und homogene Rohrbettung ausgebildet werden kann.

Weiter bevorzugt wird dem Boden bei der Aufbereitung Bindemittel zugesetzt. Auf diese Weise kann der Boden je nach Qualität des in dem Graben anstehenden Bodens derart aufbereitet werden, daß er die für die Rohrbettung erforderliche Beschaffenheit erhält.

Die Aufbereitung des Bodens erfolgt vorteilhafterweise innerhalb des Grabens, vorzugsweise durch Auffräsen. Auf diese Weise kann das Ausbilden der Rohrbettung weiter vereinfacht und beschleunigt werden, da der Boden, welcher zum Ausbilden der Rohrbettung verwendet wird, nicht erst aus dem Graben ausgehoben und dann nach dem Aufbereiten wieder in diesen eingebracht werden muß. Daher muß die Grabensohle nicht bis zur Unterkante der zu erzeugenden Rohrbettung bzw. der Unterkante des Rohres in seiner Endlage ausgehoben werden. Vielmehr wird der an der Grabensohle anstehende Boden aufgefräst, wobei zusätzlich Bindemittel zugesetzt werden kann. In diesem im Graben aufbereiteten Boden wird dann nach dem Verdichten die Rohrbettung bzw. Profilierung ausgebildet.

Alternativ kann die Aufbereitung des Bodens außerhalb des Grabens, vorzugsweise in einer Bodenmischanlage erfolgen und der aufbereitete Boden anschließend auf die Grabensohle aufgebracht werden. Auf diese Weise kann jede bekannte Bodenaufbereitungsanlage oder jedes bekannte Bodenaufbereitungsverfahren außerhalb des Grabens eingesetzt werden. Der aufbereitete Boden, welcher zur Ausbildung des Rohrbettung benötigt wird, wird dann nach dem Aufbereiten wieder in den Graben eingefüllt und dort verdichtet. Bevorzugt wird der aufbereitete Boden lagenweise auf die Grabensohle aufgebracht und verdichtet, bis eine gewünschte Bettungsdicke erreicht ist. Auf diese Weise kann auch eine dickere Bettung mit ausreichender Verdichtung ausgebildet werden. Das Verdichten des aufbereiteten Bodens kann nach bekannten Verfahren erfolgen, abhängig von den Umgebungsbedingungen und der gewünschten Verdichtung der Rohrbettung.

Gegebenenfalls wird der Boden an der Grabensohle bis in eine Tiefe aufbereitet oder der aufbereitete Boden in einer Dicke auf die Grabensohle aufgebracht, welche geringer als die Dicke bzw. Tiefe der zu erzeugenden Rohrbettung ist. Diese Verfahrensvariante eignet sich bei Böden, die eine derartige Qualität aufweisen, daß eine Aufbereitung vor dem Ausbilden des Rohrbettes im wesentlichen nicht erforderlich ist. Es wird nur eine Bodenschicht aufbereitet, welche eine geringere Dicke als die anschließend ausgebildete Rohrbettung aufweist. Daher wird der untere Teil der Rohrbettung direkt im anstehenden, nicht aufbereiteten Boden ausgebildet. Nur die oberen Bereiche der Rohrbettung, d.h. die steilsten Stellen der Seitenwandungen werden in aufbereitetem Boden ausgebildet, da diese Bereiche eine höhere Stabilität aufweisen müssen. Beispielsweise wird nur eine 40 cm dicke Bodenschicht aufbereitet, während eine 150 cm tiefe Rohrbettung für ein Rohr von beispielsweise 300 cm Durchmesser ausgebildet wird. Auf diese Weise kann bei geeignetem Boden die Tiefe des auszuhebenden Grabens reduziert werden, wodurch die Arbeitszeit verkürzt und die Stabilität des Grabens erhöht wird. Ferner kann es bei geeignetem Boden ausreichend sein, in Richtung der Grabenbreite ebenfalls lediglich die Bereiche aufzubereiten, in denen später die steilen Seitenwände der Rohrbettung ausgebildet werden, so daß der Boden nicht auf der gesamten Grabenbreite aufbereitet werden muß.

Vorzugsweise bildet das Profil der Rohrbettung einen Auflagewinkel für das zu verlegende Rohr von mindestens 90°. Der Auflagewinkel definiert bei einem runden Rohr denjenigen Bogenabschnitt des Rohrquerschnittes, welcher auf der Rohrbettung bzw. dem Rohrauflager aufliegt. Mit dem Auflagewinkel von 90° kann eine sichere Bettung, welche eine großflächige Kraftübertragung von dem Rohr auf die Bettung ermöglicht, gebildet werden. Auf diese Weise werden auftretende Spannungen minimiert oder vermieden. Je nach Größe des zu verlegenden Rohres und der Umgebungsbedingungen kann auch ein größerer Auflagewinkel bis zu 180°, d.h. die Rohrbettung verläuft bis zum Kämpfer des Rohres, verwendet werden. Dabei ist dann vor dem Ausbilden der Rohrbettung eine dickere Lage verdichteten und aufbereiteten Bodens auszubilden, in dem die Bettung entsprechend der Rohrform ausprofiliert wird.

Die erfindungsgemäße Vorrichtung zum Erzeugen einer Rohbettung insbesondere gemäß dem vorangehenden Verfahren weist als wesentliches Element einen Profilierschild auf, der eine Außenkontur hat, welche der Außenkontur des zu verlegenden Rohres zumindest in dem Bereich des Rohres entspricht, der auf die Rohrbettung aufgelegt wird. Das bedeutet der untere Teil des Profilierschildes weist ein Profil auf, welches dem unteren Teil des Rohrquerschnittes, welcher auf den Boden aufgelegt wird, entspricht. Ferner ist eine Vorschubeinrichtung vorgesehen, die mit dem Profilierschild verbunden ist, um den Profilierschild entlang einer Grabensohle durch den Boden vorzubewegen und dabei in dem Boden der Grabensohle das für die Rohrbettung erforderliche Profil auszubilden. Weiter ist ein Laser vorhanden, dessen Laserstrahl parallel zur Längsrichtung des zu verlegenden Rohres ausrichtbar ist. An dem Profilierschild ist ein Laserspiegel zum Empfang des Laserstrahls angebracht. Mit dieser Vorrichtung ist eine Führung des Profilierschilds entlang des genau ausgerichteten Laserstrahls möglich, da die Position des Punktes des auftreffenden Laserstrahls an dem Laserspiegel genau überwacht werden kann und der Profilierschild derart bewegt werden kann, daß der Laserstrahl ständig an einer vorbestimmten Stelle auf den Laserspiegel auftrifft.

Die Vorschubeinrichtung ist ein Bagger. Dies ermöglicht die Verwendung herkömmlicher Baumaschinen, ohne daß aufwendige Spezialmaschinen erforderlich sind. Ein Bagger kann über oder neben einen Graben, in dem ein Rohr verlegt werden soll, entlang fahren, um den Profilierschild in dem Graben entlang der Grabensohle durch den dort anstehenden Boden vorzuschieben. Dabei ist der Profilierschild über eine herkömmliche Schnellwechseleinrichtung mit dem Baggerarm fest verbunden. Der Laserspiegel kann dabei selbstverständlich auch an einem Teil des Baggerarms angebracht sein, welcher ortsfest zu dem Profilierschild ist, d.h. sich relativ zu dem Profilierschild nicht bewegen kann.

Zweckmäßigerweise ist an dem Laserspiegel eine Bildübertragungseinrichtung zum Übertragen des Bildes des auftreffenden Laserstrahls an einen entfernten Ort vorgesehen. Diese Anordnung hat den Vorteil, daß zur Überwachung der Position des auftreffenden Laserstrahls an dem Laserspiegel niemand in der Grube bzw. dem Graben in der Nähe des Laserspiegels anwesend sein muß. Vielmehr kann der Vorschub des Profilierschildes von einer entfernten Position gesteuert werden, an der über die Bildübertragungseinrichtung der auf den Laserspiegel auftreffende Laserstrahl überwacht werden kann. Auf diese Weise können durch eine zentrale Steuerung der Arbeiten eine hohe Arbeitseffizienz und große Arbeitssicherheit erreicht werden.

Bevorzugt ist die Bildübertragungseinrichtung einer Videokamera. Die Videokamera überträgt das Bild des auf den Laserspiegel auftreffenden Laserstrahls vorzugsweise auf einen Monitor im Fahrerhaus des Baggers. Der Baggerfahrer sieht dann genau, ob der Profilierschild relativ zu dem Laserstrahl richtig ausgerichtet ist und kann den Bagger entsprechend steuern, so daß der Profilierschild genau entlang dem Laserstrahl bewegt wird.

Alternativ kann an dem Laserspiegel zumindest ein Sensorelement zum Erfassen der Position des auftreffenden Laserstrahls vorgesehen sein. Ein solches Sensorelement kann beispielsweise eine Photodiode sein. Auf diese Weise kann die Position des auftreffenden Laserstrahls an dem Laserspiegel automatisch erfaßt werden und in Form von Daten ausgegeben werden, welche einer weiteren automatischen Verarbeitung zugänglich sind. Beispielsweise kann die gesamte Vorrichtung durch eine automatische Steuerung betrieben werden, welche über das Sensorelement die Position des Profilierschildes zu dem Laserstrahl erfaßt und den Vorschub des Profilierschildes entsprechend automatisch regelt.

Die Erfindung wird nachfolgend beispielhaft anhand der beigefügten Zeichnungen beschrieben. In diesen zeigt:
- Fig. 1: schematisch einen ausgehobenen Graben,
- Fig. 2: schematisch den Schritt des Ausbildens der Rohrbettung,
- Fig. 3: schematisch die ausgebildete Rohrbettung,
- Fig. 4: schematisch die Rohrbettung mit eingelegtem Rohr,
- Fig. 5: schematisch die Führung des Profilierschildes entlang des Laserstrahls,
- Fig. 6: schematisch das Bild des auf den Laserspiegel auftreffenden Laserstrahls,
- Fig. 7: schematisch einen Graben mit eingebrachtem aufbereitetem Bodenmaterial gemäß einer alternativen Ausführungsform des erfindungsgemäßen Verfahrens,
- Fig. 8: schematisch den Schritt des Ausbildens der Rohrbettung in dem Graben gemäß Fig. 7,
- Fig. 9: schematisch die gemäß Fig. 8 ausgebildete Rohrbettung und
- Fig. 10: schematisch die Rohrbettung gemäß Fig. 9 mit eingelegtem Rohr.

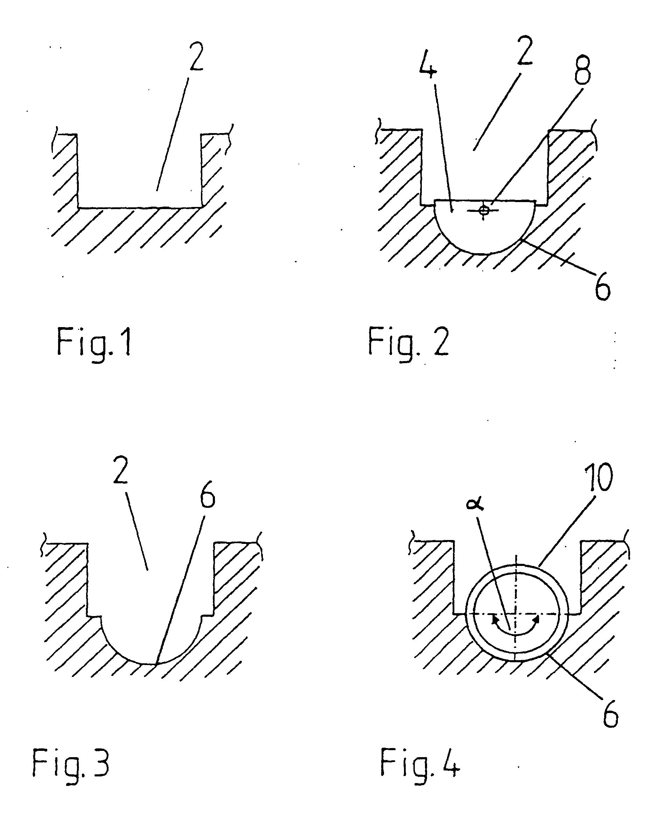

Wie in Fig. 1 schematisch im Querschnitt gezeigt, wird zunächst in herkömmlicher Weise ein Graben 2 ausgehoben. Anschließend wird an der Grabensohle wie in Fig. 2 schematisch gezeigt durch einen Profilierschild 4 eine Rohrbettung 6 ausgebildet. Der Profilierschild 4 besteht im wesentlichen aus einer Stahlplatte, welche möglicherweise erforderliche Verstärkungen aufweist. Der Profilierschild weist an seiner Unterseite eine Kontur auf, welche dem Querschnittprofil desjenigen Teils des zu verlegenden Rohres entspricht, der später auf der Rohrbettung aufliegt. Der Profilierschild wird in Längsrichtung entlang der Grabensohle bewegt, so daß er in den dort anstehenden Boden eindringt und eine Rohrbettung 6 ausprofiliert, welche der Kontur des einzulegenden Rohres entspricht. In Fig. 2 verläuft die Bewegungsrichtung des Profilierschildes 4 normal zu der Zeichnungsebene. An dem Profilierschild 4 ist zentral ein Laserspiegel 8 angebracht, auf dem die Position eines auftreffenden Laserstrahls erfaßt werden kann. Auf dem Laserspiegel 8 kann beispielsweise ein Fadenkreuz angebracht sein. Beim Ausbilden der Rohrbettung 6 wird der Profilierschild 4 dann derart bewegt, daß ein Laserstrahl, welcher parallel zu der auszubildenden Rohrbettung ausgerichtet ist, konstant an einem vorbestimmten Punkt, beispielsweise in der Mitte des Fadenkreuzes, auf den Laserspiegel 8 auftrifft. Auf diese Weise wird gewährleistet, daß die ausgebildete Rohrbettung 6 exakt dem geplanten Rohrverlauf folgt, so daß das Rohr spannungsfrei in der ausgebildeten Rohrbettung 6 verlegt werden kann.

Fig. 3 zeigt schematisch den Querschnitt der in dem Graben 2 ausgebildeten Rohrbettung 6, welche die Form einer Rinne aufweist. Dabei hat die Rinne eine Kontur, welche exakt der Außenkontur des einzulegenden Rohres entspricht. So eine großflächige Auflage für das Rohr im Bereich des gewünschten Auflagewinkels geschaffen, welche eine sichere Kraftübertragung ermöglicht und eventuelle Spannungen minimiert oder eliminiert. Auf diese Rohrbettung 6 wird, wie in Fig. 4 schematisch im Querschnitt gezeigt, ein Rohr 10 aufgelegt. Dabei liegt das Rohr 10 direkt auf der Rohrbettung 6 auf, die im gewachsenen Boden ausgebildet worden ist. Die Lagerung des Rohres ist somit ähnlich einer Lagerung, wie sie bei einem unterirdischen Rohrvortrieb erreicht wird. Durch entsprechende Wahl des Profilierschildes 4 und der Eindringtiefe des Profilierschildes 4 in den Boden an der Grabensohle kann der Auflagewinkel α gemäß den Anforderungen an Tragfähigkeit und Auflagefläche vorbestimmt werden. Der Auflagewinkel α ist nicht auf den hier gezeigten Auflagewinkel von α=180° beschränkt.

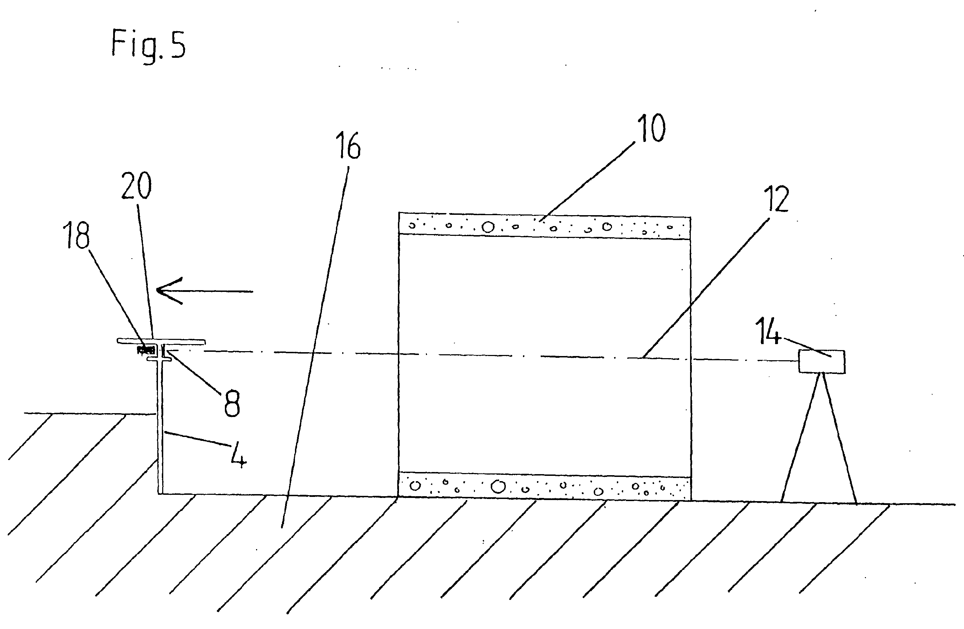

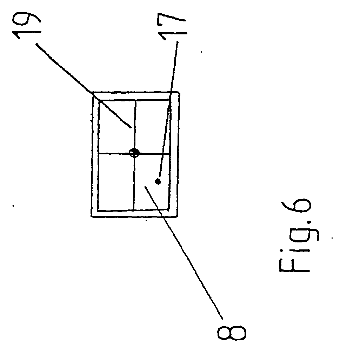

Fig. 5 zeigt in einem Schnitt entlang der Grabenlängsrichtung schematisch die Führung des Profilierschildes 4 entlang einem Laserstrahl 12. Der von einem Laser 14 erzeugte Laserstrahl 12 wird derart ausgerichtet, daß er parallel zu der Grabensohle 16 und parallel zu der auszubildenden Rohrbettung 6, d.h. in Richtung des zu verlegenden Rohres 10 verläuft. Der Profilierschild 4 weist einen Schirm oder Laserspiegel 8 auf, auf den der Laserstrahl 12 auftrifft, wie schematisch in Fig. 6 gezeigt ist. Der auftreffende Laserstrahl erzeugt auf dem Laserspiegel 8 einen Laserpunkt 17. Dieses auf dem Laserspiegel 8 erzeugte Bild wird von einer Videokamera 18 erfaßt und auf einen Monitor im Fahrerhaus eines Baggers übertragen. Der Profilierschild 4 ist an einem herkömmlichen Baggerarm (hier nicht gezeigt) mittels einer Schnellwechselplatte 20 befestigt und wird in Richtung der auszubildenden Rohrbettung 6 entlang der Grabensohle 16 vorgeschoben (in Richtung des Pfeiles in Fig. 5), wobei entsprechend der Eindringtiefe des Profilierschildes 4 in den Boden an der Grabensohle 16 eine entsprechende Rohrbettung 6 ausgebildet wird. Dabei wird der Profilierschild 4 so geführt, daß der Laserstrahl 12 in einem vorbestimmten Bereich auf den Laserspiegel 8 auftrifft. Der Baggerfahrer sieht, daß von der Videokamera 18 übertragene Bild des Laserspiegels 8 (Fig. 6) und kann, wenn der Laserstrahl 12 von der vorbestimmten Position an dem Laserspiegel 8 abweicht, die Bewegungsrichtung des Baggers entsprechend korrigieren, so daß der Profilierschild 4 genau entlang der Richtung des Laserstrahls 12 geführt wird. Zur genaueren Lageüberwachung des Laserstrahls 12 auf dem Laserspiegel 8 ist an diesem ein Fadenkreuz 19 vorgesehen. Mit dieser Laserführung kann ein genauer Verlauf der auszubildenden Rohrbettung gewährleistet werden. Ferner ermöglicht dieses Verfahren auch eine Vortrieb mit relativ großen Kräften, so daß die Rohrbettung 6 auch in einem gewachsenen, nicht speziell aufbereiteten Boden ausgebildet werden kann.

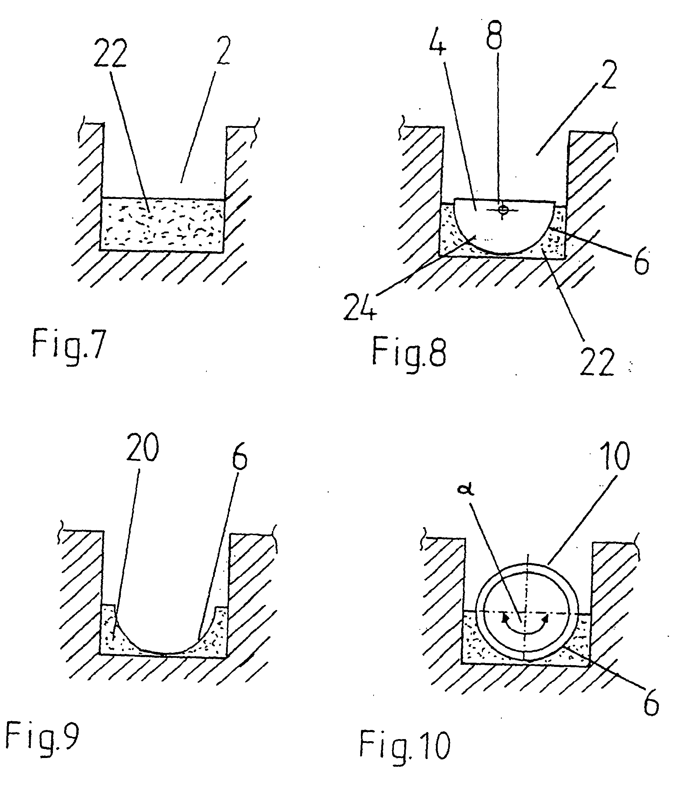

Die Figuren 7 bis 10 zeigt eine Variante des erfindungsgemäßen Verfahrens, welche sich von dem anhand von Figuren 1 bis 4 beschriebenen Verfahren dadurch unterscheidet, daß die Rohrbettung nicht im gewachsenen Boden sondern im aufbereiteten Boden ausgebildet wird. Fig. 7 zeigt schematisch im Querschnitt einen in herkömmlicher Weise ausgehobenen Graben 2, auf dessen Grabensohle eine Lage aufbereiteten Bodenmaterials 22 aufgebracht worden ist. Das aufbereitete Bodenmaterial 22 kann entweder direkt an der Grabensohle durch Einfräsen von Bindemitteln und Zusatzstoffen erzeugt werden oder ein Teil des ausgehobenen Bodens wird außerhalb des Grabens 2 entsprechend aufbereitet und dann wieder in den Graben 2 eingebracht und dort verdichtet.

Die weiteren Verfahrensschritte gemäß Figuren 8 bis 10 entsprechen im wesentlichen den anhand von Figuren 2 bis 4 beschriebenen Verfahrensschritten mit dem einzigen Unterschied, daß die Rohrbettung 6 im aufbereiteten Boden 22 und nicht im gewachsenen Boden ausgebildet wird.

Wie in Fig. 8 schematisch dargestellt, wird in dem aufbereiteten und verdichteten Boden 22 mit dem Profilierschildes 4 die gewünschte Rohrbettung 6 entsprechend der Außenkontur des zu verlegenden Rohres ausgebildet. Der Profilierschild 4 bildet dabei eine Schablone, welche in Grabenlängsrichtung, d.h. in Längsrichtung der zu verlegenden Rohrleitung über bzw. durch das aufbereitete und verdichtete Bodenmaterial 22 geführt wird, wobei ein Abschnitt 24 des Profilierschildes 4, welcher eine Außenkontur aufweist, die der Außenkontur des zu verlegenden Rohres entspricht, in dem verdichteten Bodenmaterial 22 eine Rohrbettung 6 in Form einer Rinne ausbildet, die der Außenkontur des zu verlegenden Rohres entspricht. Der Profilierschild 4 wird dabei in Fig. 8 senkrecht zur Zeichnungsebene bewegt. Dabei erfolgt die Führung mittels Laserstrahl 12 und Laserspiegel 8 entsprechend dem anhand von Figuren 2, 5 und 6 beschriebenen Verfahren.

Fig. 10 zeigt schematisch ein Rohr 10, welches in die in Fig. 9 dargestellte Rohrbettung 6 eingelegt ist. Dabei schließt der Auflagewinkel α den Bogenabschnitt des Rohrquerschnittes ein, welcher auf der Rohrbettung 6 aufliegt. Es kann somit mit dem erfindunggemäßen Verfahren sehr leicht durch Profilieren des verdichteten Bodens 22 in einem Arbeitsgang die vollständige Rohrbettung mit dem gewünschten Auflagewinkel α ausgebildet werden, ohne daß später ein zusätzliches Unterstopfen des Rohres erforderlich ist, um den gewünschten Auflagewinkel α zu erreichen. Dabei ist der Auflagewinkel nicht auf den hier gezeigten Winkel α=180° beschränkt, sondern kann gemäß den Erfordemissen passend gewählt werden.

### Bezugszeichenliste

- 2: Graben
- 4: Profilierschild
- 6: Rohrbettung
- 8: Laserspiegel
- 10: Rohr
- 12: Laserstrahl
- 14: Laser
- 16: Grabensohle
- 17: Laserpunkt
- 18: Videokamera
- 19: Fadenkreuz
- 20: Schnellwechselplatte
- 22: aufbereitetes Bodenmaterial
- 24: Abschnitt des Proflierschildes 4

## Patentansprüche

1. Verfahren zur Herstellung einer Rohrbettung (6) mit folgenden Schritten:
Ausheben eines Grabens (2),
Profilieren des Bodens an der Grabensohle entsprechend der Außenkontur eines zu verlegenden Rohres (10) mit einem Profilierschild (4), der eine Außenkontur aufweist, welche der Außenkontur des Rohres (10) zumindest in dem Bereich des Rohres (10), welcher auf die Rohrbettung (6) aufgelegt wird, entspricht, wobei
ein Laserstrahl (12) parallel zur Richtung des zu verlegenden Rohres (10) ausgerichtet wird,
**dadurch gekennzeichnet,daß**
an dem Profilierschild (4) ein Laserspiegel (8) angebracht ist und
der Profilierschild (4) derart in Längsrichtung des zu verlegenden Rohres (10) durch den Boden an der Grabensohle (16) geführt wird, daß der Laserstrahl (12) während der Bewegung des Profilierschildes (4) immer in einem vorbestimmten Bereich auf den Laserspiegel (8) auftrifft,
wobei der Profilierschild (4) am Ausleger eines Baggers angebracht ist und von dem Bagger durch den Boden geführt wird.

2. Verfahren nach Anspruch 1, bei welchem an dem Laserspiegel (8) eine Bildübertragungseinrichtung (18) vorgesehen ist, die das Bild (17) des auftreffenden Laserstrahls (12) an einen entfernten Ort, vorzugsweise in das Fahrerhaus des Baggers überträgt.

3. Verfahren nach Anspruch 1 oder 2, bei welchem an dem Laserspiegel (8) zumindest ein Sensorelement zur Erfassung der Position des auftreffenden Laserstrahls (12) vorgesehen ist.

4. Verfahren nach einem der vorangehenden Ansprüche, bei welchem nach dem Ausheben des Grabens (2) zumindest ein Teil des ausgehobenen und/oder an der Grabensohle (16) anstehenden Bodens aufbereitet wird,
der aufbereitete Boden (22) an der Grabensohle (16) verdichtet wird und die Rohrbettung (6) in dem aufbereiteten und verdichteten Boden (22) ausgebildet wird.

5. Verfahren nach Anspruch 4, bei welchem der Boden (22) beim Aufbereiten homogenisiert wird.

6. Verfahren nach Anspruch 4 oder 5, bei welchem dem Boden (22) beim Aufbereiten Bindemittel zugesetzt wird.

7. Verfahren nach einem der Ansprüche 4 bis 6, bei welchem die Aufbereitung des Bodens (22) innerhalb des Grabens (2) vorzugsweise durch Auffräsen erfolgt.

8. Verfahren nach einem der Ansprüche 4 bis 6, bei welchem die Aubereitung des Bodens (22) außerhalb des Grabens (2) vorzugsweise in einer Bodenmischanlage erfolgt und der aufbereitete Boden (22) anschließend auf die Grabensohle (16) aufgebracht wird.

9. Verfahren nach einem der Ansprüche 4 bis 8, bei welchem der Boden (22) an der Grabensohle bis in eine Tiefe aufbereitet oder der aufbereitete Boden (22) in einer Dicke auf die Grabensohle (16) aufgebracht wird, welche geringer als die Dicke der zu erzeugenden Rohrbettung (6) ist.

10. Verfahren nach einem der vorangehenden Ansprüche, bei welchem das Profil der Rohrbettung (6) einen Auflagewinkel (α) für das zu verlegende Rohr (10) von mindestens 90° bildet.

11. Vorrichtung zum Erzeugen einer Rohrbettung (6) mit:
einem Profilierschild (4), der eine Außenkontur (24) aufweist, welche der Außenkontur des zu verlegenden Rohres (10) zumindest in dem Bereich des Rohres entspricht, der auf die Rohrbettung (6) aufgelegt wird, und
einer Vorschubeinrichtung, welche mit dem Profilierschild (4) verbunden ist,
**dadurch gekennzeichnet, daß**
an dem Profilierschild (4) ein Laserspiegel (8) zum Empfang eines parallel zur Längsrichtung des zu verlegenden Rohres (10) ausrichtbaren Laserstrahls (12) angebracht ist,
wobei der Profilierschild (4) über eine an diesem angeordnete Schnellwechselplatte (20) an einem Baggerarm eines Baggers als Vorschubeinrichtung anbringbar ist und
durch den Bagger in der auszubildenden Rohrbettung vorgeschoben wird.

12. Vorrichtung nach Anspruch 11, bei welcher an dem Laserspiegel (8) eine Bildübertragungseinrichtung (18) zum Übertragen des Bildes (17) des auftreffenden Laserstrahls (12) an einen entfernten Ort vorgesehen ist.

13. Vorrichtung nach Anspruch 12, bei welcher die Bildübertragungseinrichtung eine Videokamera (18) ist.

## Claims

1. Method for creating a pipe bedding (6), having the following steps:
excavation of a trench (2),
profiling of the earth on the trench floor, in accordance with the outer contour of a pipe (10) to be laid, using a profiling blade (4) which has an outer contour corresponding to the outer contour of the pipe (10), at least in that region of the pipe (10) which is placed onto the pipe bedding (6),
a laser beam (12) is aligned parallel to the direction of the pipe (10) to be laid,
**characterized in that**
a laser mirror (8) is attached to the profiling blade (4) and
the profiling blade (4) is guided through the earth on the trench floor (16), in the longitudinal direction of the pipe (10) to be laid, in such a way that, during the movement of the profiling blade (4), the laser beam (12) hits the laser mirror (8) always in a prespecified region,
wherein the profiling blade (4) is attached to the boom of an excavator and is guided through the earth by the excavator.

2. Method according to Claim 1, in which on the laser mirror (8) there is provided an image transmission device (18), which transmits the image (17) of the incident laser beam (12) to a remote location, preferably into the cab of the excavator.

3. Method according to Claim 1 or 2, in which on the laser mirror (8) there is provided at least one sensor element for detecting the position of the incident laser beam (12).

4. Method according to one of the preceding claims, in which, after the excavation of the trench (2), at least a part of the earth which has been excavated and/or is present on the trench floor (16) is treated, the treated earth (22) on the trench floor (16) is compacted and the pipe bedding (6) is configured in the treated and compacted earth (22).

5. Method according to Claim 4, in which the earth (22), in the course of being treated, is homogenized.

6. Method according to Claim 4 or 5, in which the earth (22), in the course of being treated, has binding agent added to it.

7. Method according to one of Claims 4 to 6, in which the treatment of the earth (22) takes place within the trench (2), preferably by countersinking.

8. Method according to one of Claims 4 to 6, in which the treatment of the earth (22) takes place outside the trench (2), preferably in an earth-mixing plant, and the treated earth (22) is then applied to the trench floor (16).

9. Method according to one of Claims 4 to 8, in which the earth (22) on the trench floor is treated up to a depth or the treated earth (22) is applied to the trench floor (16) in a thickness which is less than the thickness of the pipe bedding (6) to be produced.

10. Method according to one of the preceding claims, in which the profile of the pipe bedding (6) forms an angle of support (α) for the pipe (10) to be laid of at least 90°.

11. Apparatus for producing a pipe bedding (6), having:
a profiling blade (4), which has an outer contour (24) corresponding to the outer contour of the pipe (10) to be laid, at least in that region of the pipe (10) which is placed onto the pipe bedding (6), and
an advancement mechanism connected to the profiling blade (4),
**characterized in that**
to the profiling blade (4) there is attached a laser mirror (8) for receiving a laser beam (12) which is alignable parallel to the longitudinal direction of the pipe (10) to be laid,
wherein the profiling blade (4) can be attached as an advancement mechanism, by a quick-change plate (20) disposed thereon, to an excavator arm of an excavator, and
is advanced by the excavator in the pipe bedding to be configured.

12. Apparatus according to Claim 11, in which on the laser mirror (8) there is provided an image transmission device (18) for transmitting the image (17) of the incident laser beam (12) to a remote location.

13. Apparatus according to Claim 12, in which the image transmission device is a video camera (18).

## Revendications

1. Procédé de fabrication d'un support pour tuyaux (6) comprenant les étapes suivantes :
creusement d'une tranchée (2),
profilage du sol au niveau du fond de la tranchée conformément au contour externe d'un tuyau à poser (10) avec une lame de profilage (4), qui présente un contour externe correspondant au contour externe du tuyau (10) au moins dans la zone du tuyau (10), lequel est posé sur le support pour tuyaux (6), moyennant quoi
un faisceau laser (12) est orienté parallèlement à la direction du tuyau à poser (10),
**caractérisé en ce que**
un miroir de renvoi du faisceau laser (8) est placé sur la lame de profilage (4) et la lame de profilage (4) est conduite dans la direction longitudinale du tuyau à poser (10) à travers le sol jusqu'au fond de la tranchée (16), de manière à ce que le faisceau laser (12) ait toujours un impact sur le miroir de renvoi du faisceau laser dans une zone prédéfinie, pendant le déplacement de la masse de profilage (4),
moyennant quoi la lame de profilage (4) est fixée sur la flèche d'un excavateur et est conduite par l'excavateur à travers le sol.

2. Procédé selon la revendication 1, pour lequel un dispositif de transmission d'images (18) est prévu sur le miroir de renvoi du faisceau laser (8), lequel transmet l'image (17) de l'impact du faisceau laser (12) à un endroit éloigné, de préférence dans la cabine du conducteur de l'excavateur.

3. Procédé selon la revendication 1 ou 2, pour lequel au moins un élément de capteur permettant de saisir la position de l'impact du faisceau laser (12) est prévu sur le miroir de renvoi du faisceau laser (8).

4. Procédé selon l'une des revendications précédentes, pour lequel au moins une partie du sol creusé et/ou du sol présent au niveau du fond de la tranchée (16) est préparée après le creusement de la tranchée (2), le sol préparé (22) est compacté sur le fond de la tranchée (16) et le support pour tuyaux (6) est formé dans le sol préparé et compacté (22).

5. Procédé selon la revendication 4, pour lequel le sol (22) est homogénéisé lors de sa préparation.

6. Procédé selon la revendication 4 ou 5, pour lequel un liant est ajouté au sol (22) lors de la préparation.

7. Procédé selon l'une des revendications 4 à 6, pour lequel la préparation du sol (22) a lieu à l'intérieur de la tranchée (2), de préférence par un dressage à la fraise.

8. Procédé selon l'une des revendications 4 à 6, pour lequel la préparation du sol (22) a lieu en dehors de la tranchée (2), de préférence dans une installation stabilisatrice et le sol préparé (22) est ensuite étalé sur le fond de la tranché (16).

9. Procédé selon l'une des revendications 4 à 8, pour lequel le sol (22) est préparé au niveau du fond de la tranchée jusqu'à une certaine profondeur ou le sol préparé (22) est étalé selon une certaine épaisseur sur le fond de la tranchée (16), laquelle est inférieure à l'épaisseur du support pour tuyaux (6) à fabriquer.

10. Procédé selon l'une des revendications précédentes, pour lequel le profil du support pour tuyaux (6) forme un angle d'appui (α) d'au moins 90°pour le tuyau à poser (10).

11. Dispositif de fabrication d'un support pour tuyaux (6) doté :
d'une lame de profilage (4), qui présente un contour externe (24), lequel correspond au contour externe du tuyau à poser (10) au moins dans la zone du tuyau, qui doit être posé sur le support pour tuyaux (6), et
d'un dispositif d'avance, qui est relié à la lame de profilage (4),
**caractérisé en ce que** :
un miroir de réception du faisceau laser (8), destiné à recevoir un faisceau laser (12) pouvant être orienté parallèlement à la direction longitudinale du tuyau à poser (10), est installé sur .la lame de profilage (4),
moyennant quoi la lame de profilage (4) peut être installée, par l'intermédiaire d'une plaque de changement rapide (20), agencée sur cette dernière lame de profilage, sur un bras d'excavateur d'un excavateur en tant que dispositif d'avance et elle est poussée en avant par l'excavateur dans le support pour tuyaux à construire.

12. Dispositif selon la revendication 11, pour lequel un dispositif de transmission d'images (18), permettant de transmettre l'image (17) de l'impact du faisceau laser (12) à un endroit éloigné, est prévu sur le miroir de renvoi du faisceau laser (8).

13. Dispositif selon la revendication 12, pour lequel le dispositif de transmission d'images est une caméra vidéo (18).
